Europäisches Patentamt

European Patent Office

Office européen des brevets

(19)

(11) Numéro de publication: **0 293 293**
**A1**

(12) **DEMANDE DE BREVET EUROPEEN**

(21) Numéro de dépôt: **88401268.3**

(22) Date de dépôt: **25.05.88**

(51) Int. Cl.⁴: **G 01 T 1/164**

(30) Priorité: **27.05.87 FR 8707480**

(43) Date de publication de la demande:
**30.11.88 Bulletin 88/48**

(84) Etats contractants désignés: **DE GB NL**

(71) Demandeur: **COMMISSARIAT A L'ENERGIE ATOMIQUE 31/33, rue de la Fédération F-75015 Paris (FR)**

(72) Inventeur: **Tararine, Michel 6, rue du Four F-92330 Sceaux (FR)**

**Thevenin, Bernard 1, Chemin la Bourrelière F-38120 Saint Egrève (FR)**

**Mestais, Corinne Le Prieuré Bernin F-38190 Brignoud (FR)**

(74) Mandataire: **Mongrédien, André et al c/o BREVATOME 25, rue de Ponthieu F-75008 Paris (FR)**

(54) **Procédé de correction de distorsion géométrique d'une image, notamment d'une image produite par une gamma-caméra.**

(57) On corrige la distorsion spatiale de l'image d'une gamma-caméra en utilisant une matrice de correction étendue sur un maillage de 128 X 128. On montre que le respect de la précision attendue n'est obtenu qu'en prenant un maillage de mailles élementaires suffisamment fines.

EP 0 293 293 A1

## Description

## PROCEDE DE CORRECTION DE DISTORSION GEOMETRIQUE D'UNE IMAGE, NOTAMMENT UNE IMAGE PRODUITE PAR UNE GAMMA-CAMERA

La présente invention a pour objet un procédé de correction de distorsion géométrique d'une image, notamment d'une image produite par une gamma-caméra. Elle trouve son application particulièrement dans le domaine médical où les gamma-caméras sont utilisées comme aide au diagnostic. Elle se rapporte aux caméras à scintillation (ou gamma-caméra) de type ANGER dont le brevet américain 3.011.057 décrit le fonctionnement dans ses principes et ses moyens de réalisation. Ces gamma-caméras sont destinées à détecter et à visualiser des photons émis par des corps radioactifs.

Les gamma-caméras sont utilisées en médecine nucléaire pour visualiser dans un organe la répartition de molécules marquées par un isotope radioactif que l'on a injecté à un patient. Une gamma-caméra comprend généralement un collimateur pour focaliser les photons gamma émis par le patient, un cristal scintillateur pour transformer les photons gamma en photons lumineux ou scintillations, et un réseau de tubes photomultiplicateurs qui transforment chacune des scintillations en des impulsions électriques dites contributions électriques de tubes. Elles comportent en outre des circuits électroniques pour produire à partir des contributions électriques fournies par les tubes photomultiplicateurs, des signaux de coordonnées X et Y du lieu où s'est produite la scintillation, ainsi qu'un signal de validation Z quand l'énergie W de la scintillation appartient à une bande d'énergie prédéterminée.

Cette chaine de détection est généralement suivie d'un ensemble de visualisation comportant généralement un oscilloscope cathodique commandé par les signaux de coordonnées X, Y, et par Z pour visualiser par un point lumineux sur l'écran le point d'impact du photon gamma sur le cristal. Cet impact est aussi appelé évènement d'image. L'ensemble de visualisation peut éventuellement comporter un dispositif photographique pour former une image de l'organe observé en intégrant un grand nombre de points lumineux produits sur l'écran cathodique. Il peut par ailleurs comprendre un dispositif de traitement numérique des images. En particulier l'ensemble de visualisation peut être adapté à la présentation de tomographies de l'organe observé. Pour atteindre ce but on acquiert plusieurs images de cet organe selon une pluralité d'orientations d'observation de la gamma-caméra par rapport à cet organe. Par des traitements du signal, analogues à ceux rencontrés dans les tomodensitomètres, on peut reconstituer des images de coupes des organes examinés.

Entre autres qualités une gamma-caméra doit posséder une bonne résolution spatials, c'est à dire la capacité de distinguer des petites sources radioactives rapprochées, une bonne réponse en taux de comptage, c'est à dire la capacité de traiter un grand nombre d'évènements par unité de temps, et une qualité d'image indépendante de l'énergie de l'isotope considéré. La résolution spatiale dépend de la précision du calcul des coordonnées X et Y de chacun des évènements d'images. La qualité de l'élaboration de ces coordonnées dépend essentiellement des lois physiques régissant le fonctionnement des différentes parties de la gamma-caméra. Ainsi l'interaction d'un photon gamma avec le cristal donne naissance à une scintillation lumineuse dont l'intensité décroît exponentiellement avec le temps. La constante de temps de cette décroissance est caractéristique du cristal scintillateur utilisé. Par exemple, pour un cristal d'iodure de sodium activé au thallium, NaI (T1), elle est de l'ordre de 250 nanosecondes. Cette scintillation est vue par plusieurs tubes photomultiplicateurs simultanément. Les photons lumineux composant cette scintillation arrachent des photoélectrons aux photocathodes des tubes photomultiplicateurs. Le nombre de photoélectrons arrachés obéit, pour une scintillation donnée, à la loi statistique de Poisson. Ceci signifie que la contribution électrique d'un tube photomultiplicateur recevant une scintillation a une amplitude dont la valeur suit une distribution statistique de Poisson et dont la valeur est fonction de l'énergie des photons lumineux incidents. Par ailleurs, à énergie constante, cette contribution électrique est une fonction sensiblement gaussienne, de la distance séparant le centre de ce tube photomultiplicateur du lieu où s'est produit la scintillation. Si la scintillation se produit à l'aplomb du centre de ce tube, la contribution électrique est maximum. Plus le lieu de la scintillation est éloigné du centre du tube, plus la contribution électrique est faible. A titre d'exemple, si une scintillation se produit à l'aplomb d'une paroi du tube la contribution électrique de celui-ci est environ réduite de moitié par rapport à la contribution électrique maximum.

Une scintillation est vue par plusieurs tubes photomultiplicateurs simultanément, généralement six à dix tubes. Aussi, la détermination de l'emplacement de cette scintillation sur le cristal, elle-même représentative du lieu d'émission du photon gamma d'excitation (et donc de l'évènement d'image), peut être obtenue en calculant l'emplacement du barycentre des contributions électriques délivrées par l'ensemble des tubes photomultiplicateurs excités par cette scintillation. Ce calcul s'effectue simplement, selon ANGER, en injectant les contributions électriques au travers d'un jeu de matrices de résistances dont les valeurs des résistances sont fonction des positions de tubes photomultiplicateurs auxquels elles sont raccordées. Les positions de ces tubes sont repérées par rapport à des axes cartésiens de référence dont le point d'intersection est généralement situé au centre du réseau de tubes. Dans chaque matrice, il y a autant de résistances qu'il y a de tubes photomultiplicateurs dans le réseau de tubes. Chacune des résistances est reliée d'une part à la sortie d'un tube photomultiplicateur différent et d'autre part à un point commun qui constitue la sortie de la matrice. Ces résistances effectuent ainsi une pondération des contributions électriques de chacun des tubes photomultiplicateurs qui les alimentant.

Un des problèmes présentés par les détecteurs de gamma-caméras du type ANGER est qu'ils présentent des distorsions géométriques de l'image liées à la structure de captation de la lumière : cristal scintillateur - tubes photomultiplicateurs - matrices de barycentration. Les progrès de la médecine nucléaire, et en particulier les améliorations faites pour recueillir davantage d'informations et des informations meilleures à partir des gamma-caméras, par exemple pour la détection de petites tumeurs, conduisent à une absence de linéarité inhérente à la conception et à la réalisation des caméras. Il en résulte une distorsion spatiale des images gênante. Ces distorsions peuvent être à l'origine de défauts d'uniformité de densité importantes. A titre d'exemple une contraction de 0,4mm du rayon de l'image d'une surface circulaire de 1cm de rayon conduit à un défaut d'uniformité de 8%. Ces défauts d'uniformité peuvent être particulièrement gênants en tomographie où l'effet d'amplification des défauts d'uniformité dû aux procédés de reconstruction peut être supérieur à un facteur 10.

On a tenté, dans l'état de la technique, de corriger les effets de cette distorsion. Le principe général de la correction est le suivant. On effectue la mesure d'une image d'une mire régulière placée entre une source radioactive d'émission uniforme et la gamma-caméra. Si la gamma-caméra était parfaite, l'image représentée devrait correspondre à la répartition régulière des trous ou des fentes de la mire. La mesure effectuée montre en fait des irrégularités provenant des effets de distorsion spatiale. On peut cependant utiliser dans l'image ainsi acquise la connaissance de la distorsion, mesurée en comparant l'image acquise à la répartition théorique à laquelle on aurait dû aboutir, pour effectuer les corrections des images ultérieurement acquises avec la même gamma-caméra. Ainsi, dans le brevet américain 3745345, la mire, le fantôme d'acquisition, comportent une série de trous de diamètre 3 millimètres espacés les uns des autres de 24 millimètres. Quatre acquisitions sont faites en décalant à chaque fois en X et Y, la mire de 12 millimètres. Pour chaque point de mesure une paire de coefficients de correction est calculée et est stockée. Des points intermédiaires sont déterminés par interpolation jusqu'à 64 x 64 pour tout le champ image. En fonctionnement normal, l'image distordue est acquise et est stockée. En fin d'acquisition, un programme de correction redistribue les évènements d'image de la matrice d'image distordue dans une matrice d'image corrigée obtenus grâce aux facteurs de correction. Cette méthode présente deux inconvénients. D'une part la redistribution des évènements d'image en fonction de la surface recouverte conduit à un élargissement du contenu d'une maille sur quatre mailles. Il en résulte automatiquement une perte de la résolution spatiale de l'image corrigée : elle devient moins précise. D'autre part, à cause de la distorsion, le nombre de coups à redistribuer n'est pas exact. En effet, il n'y a aucune raison pour que la surface d'une maille élémentaire donnée dans l'image acquise et distordue soit équivalente à la surface d'une maille élémentaire dans l'image corrigée.

Dans un autre état de la technique représenté par le brevet français 2.412.856, le fantôme d'acquisition est une mire de fentes de 3 millimètres espacées de 15 millimètres. Quatre acquisitions sont également faites en les décalant de 7,5 mm en X et en Y. Pour chaque coordonnée X et Y de l'image distordue, un programme calcule les nouvelles coordonnées U et V de l'image non distordue. Ce programme ne calcule pas de coefficient de correction mais directement les nouvelles coordonnées. Ces nouvelles valeurs U et V sont stockées dans une matrice 64 x 64. En fonctionnement de correction, X et Y sont codés sur 12 bits. Les six bits de poids fort de X et de Y adressent la mémoire des U et V. Puis une interpolation linéaire est effectuée en utilisant les six bits de poids faible de X et Y. On utilise ainsi le décalage d'un évènement d'image à placer par rapport aux quatre angles de la maille élémentaire de l'image corrigée dans laquelle cet évènement d'image doit finalement se trouver. Compte tenu d'un champ image d'environ 400 millimètres de diamètre, une codification sur douze bits des coordonnées des évènements d'image devrait conduire normalement à une précision d'image de l'ordre de 0,1 millimètre. Or, l'expérience montre que l'on n'aboutit pas à cette précision de l'image corrigée. Le document 2.412.856 préconise bien de remplacer l'interpolation linéaire par une interpolation non linéaire , par exemple d'un type cubique, mais ce document ajoute que cependant l'interpolation linéaire donne une précision suffisante pour calculer les coordonnées vraies. Ceci signifie en fait, et l'expérience le vérifie, que l'interpolation non linéaire ne donne pas de meilleurs résultats. On le verra par la suite, la précision attendue de 0,1 millimètre dans l'image redressée, ne peut pas ainsi être atteinte.

Un troisième état de la technique, constitué par le brevet européen 0021.366, préconise d'utiliser un fantôme d'acquisition, qui est une mire de fentes, de 1 millimètre, espacées de 15 millimètres. Les données sont stockées dans une matrice de 256 x 256 sur 12 bits. Un calculateur élabore une matrice de correction de 64 x 64 de coefficients de correction. Là encore, les six bits de poids fort adressent la mémoire des coefficients de correction et permettent d'aboutir dans une maille élementaire de correction à laquelle sont en outre associés huit coefficients correspondant à une correction plus fine d'interpolation qui utilise les six bits de poids faible des coordonnées calculées. Ultérieurement, une analyse d'uniformité est faite en phase de calibration et de correction. Le calculateur calcule la densité Fi d'évènements d'image par surface élémentaire Ai de l'image distordue acquise. Puis il calcule une densité F'i correspondant à une surface élémentaire de l'image corrigée de surface A'i obtenue après application des coefficients de correction. Si la correction de distorsion était parfaits F'i devrait être uniforme. Le brevet européen cité préconise d'utiliser le gradient de cette densité corrigée pour modifier itérativement les coefficients de correction de distorsion. Ce brevet met donc en évidence ce qui est apparu à la lecture des deux précédents, à savoir qu'il faut absolument tenir compte de la densité d'informations en fonction de la distorsion. La solution préconisée dans ce dernier document présente en outre un inconvénient important du fait qu'elle introduit des défauts de densité de l'image, inhérents à d'autres raisons que la distorsion d'image, dans la correction de distorsion d'image. Une fois appliquée cette technique, il en résulte que la précision attendue ne peut pas être atteinte puisque le perfectionnement tend à répartir sur plusieurs mailles voisines des défauts qui apparaissent dans une maille, sans par ailleurs en discriminer les raisons.

On s'est alors posé la question de savoir pourquoi ces différentes techniques qui, compte tenu du nombre de bits utlisé pour coder les coordonnées des évènements d'images, devaient normalement aboutir à une précision d'image attendue n'y aboutissaient pas. En particulier on s'est posé la question de savoir pourquoi, selon le deuxième état de la technique citée, la correction par approximation par polynôme cubique n'était pas meilleure que l'interpolation linéaire. On a alors découvert que le choix d'un maillage 64 x 64 pour tout un champ image de diamètre 400 millimètres, définissait en fait une maille trop grande, qui fournissait de ce fait une base d'interpolation présentent dès le départ un échantillonnage insuffisant de la fonction de distorsion et qu'on pouvait déduire du nombre de bits sur lequel étaient codées les coordonnées des évènements d'image. D'autre part on s'est apperçu que les calculs intermédiaires d'interpolation devainet être faits avec une précision supérieure au 1/10° de millimètre si on voulait avoir en fin de calcul la précision souhaitée, c'est à dire le 1/10° de millimètre pour un défaut d'uniformité résiduel de l'ordre de 2%. En définitive, on a déterminé qu'il y avait une relation entre le nombre minimum de mailles élémentaires dans le maillage utilisé pour établir la matrice de correction d'image et la précision attendue de la correction de distorsion spatiale; cette relation est fonction du gradient de distorsion spatiale. On s'est rendu compte ainsi qu'il était nécessaire de faire un calcul d'interpolation plus précis que la précision minimale souhaitée.

Aussi l'invention a pour objet un procédé de correction de distorsion spatiale de l'image produite par une gamma-caméra, cette gamma-caméra fournissant des signaux de sortie qui représentent, dans un champ image, des coordonnées d'évènements d'image, le procédé comprenant les étapes suivantes :
- on mesure les coordonnées des évènements d'image obtenus par l'interposition d'une mire test qui correspond à une distribution théorique uniforme de ces évènements d'images,
- on calcule par approximation cubique les déplacements de coordonnées des points d'un maillage théorique qui correspond à l'image test,
- on en déduit des corrections de distorsion à affecter à des coordonnées d'évènements d'image,
- et on les applique à ces coordonnées, caractérisé en ce que
- on détermine un nombre minimum de mailles élémentaires dans le maillage correspondant au champ image, en fonction d'une précision attendue de la correction de distorsion spatiale.

L'invention sera mieux comprise à la lecture de la description qui suit et à l'examen des figures qui l'accompagnent. Celles-ci ne sont données qu'à titre indicatif et nullement limitatif de l'invention. Les figures montrent :
- figure 1 : une mire test utilisable pour mettre en oeuvre le procédé de l'invention ;
- figure 2 : un profil des signaux détectés pour une ligne de l'image de la mire ;
- figure 3 : la comparaison d'un réseau de droites parallèles équidistantes correspondant à l'image théorique à obtenir, à l'image distordue effectivement obtenue ;
- figure 4 : le calcul par approximation cubique des déplacements de coordonnées des points d'un maillage de l'image test ;
- figure 5 : un procédé particulier de calcul de la maille élémentaire selon l'invention;
- figure 6 : la méthode d'interpolation utilisée dans l'invention pour corriger une image

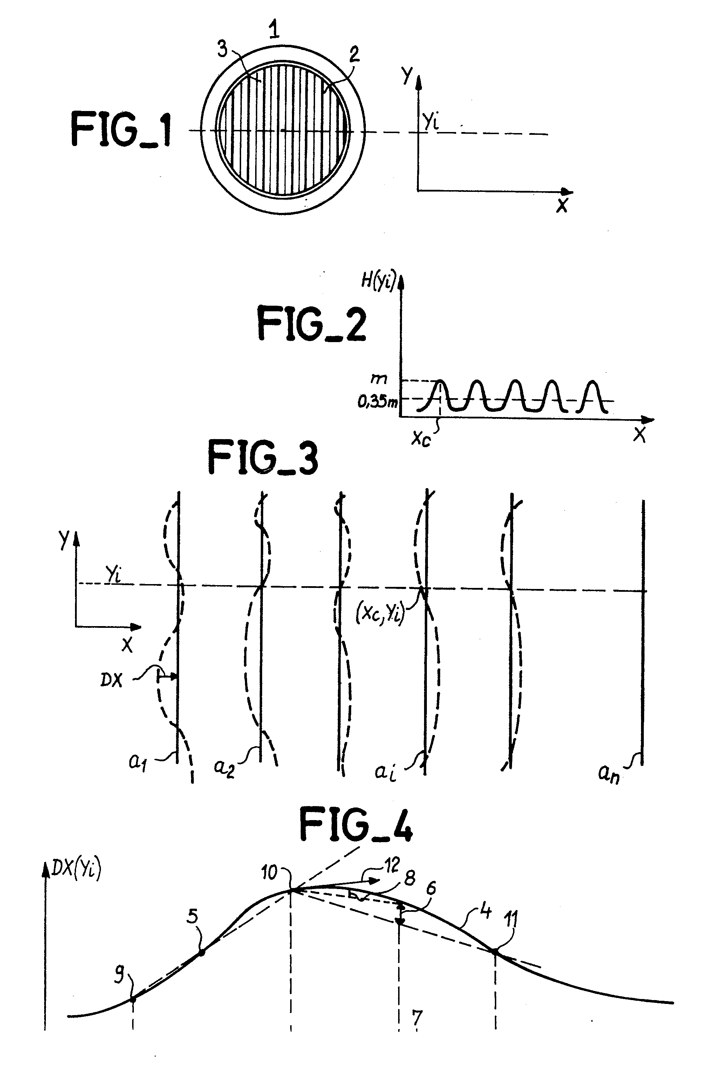

La figure 1 représente une mire test à utiliser pour mettre en oeuvre l'invention. La mire 1 comporte de fentes telles que 2, dont la largeur est de l'ordre d'un millimètre et qui sont espacées les unes des autres par des bandes 3, d'environ douze millimètres de large. Compte tenu d'un champ image de diamètre 400 millimètres, il y a trente trois fentes. La fente centrale est légèrement décalée par rapport au centre de la mire de 3 millimètres de manière à ce que si elle est retournée de 180 degrés, on puisse définir un autre pas de fentes entrelacé avec le premier. On suppose que cette mire est placée entre une gamma-caméra non représentée (de champ image égal) et une source de rayonnement de rayons gamma de densité d'émission à peu près uniforme dans le champ image. L'image de cette mire est analysée selon un certain nombre de lignes. Par exemple à l'ordonnée Yi d'une ligne, on relève, au bout d'une certaine durée, l'histogramme H des évènements d'images en fonction de l'abscisse X des points de la ligne.

L'histogramme H représenté sur la figure 2 a l'allure d'une succession de crêtes approximativement espacées les unes des autres du pas 3 de la mire 1. Si on appelle m le maximum de ces crêtes d'histogramme, on remarque que pour les fréquences 0,35 m la largeur des crêtes est de l'ordre de quatre millimètres. Il devient en conséquence inutile de rechercher à faire l'image d'une mire de pas plus fin : on risquerait de voir s'interpénétrer les crêtes relatives à des fentes adjacentes. Pour chacune de ces crêtes on calcule l'abscisse Xc du barycentre de la crête. Compte tenu du fait que l'on a utilisé trente trois fentes on obtiendra ainsi trente trois valeurs de Xc. Après retournement de la mire, on peut disposer de trente trois autres valeurs de Xc en principe interlacées avec les trente trois précédentes. Le calcul des abscisses des barycentres est d'un type connu. De préférence il est effectué par programme de traitement numérique dans un ordinateur.

On calcule ainsi pour chacune des lignes d'ordonnée Yi de l'image test les 66 abscisses des barycentres. En pratique on effectue ce calcul pour 512 lignes en utilisant les 9 bits de poids fort des ordonnées des évènements d'image pris en compte. La figure 3 représente sous la forme de séries de points les alignements de ces barycentres en fonction de leur ligne d'ordonnée Yi. Il est évident qu'ils correspondent à des fentes dont les axes centraux a1 a2 etc... sont équidistants les uns des autres. La détermination de la position des axes ai par rapport au barycentre Xc Yi est effectuée en tenant compte de cette équidistance d'une part et en appliquant une méthode des moindres carrés d'autre part. Selon cette méthode la somme des carrés des variations d'abscisse DX est minimisée pour un jeu d'axes ai parallèles et équidistants les uns des autres. Le programme qui effectue la détermination du réseau des droites ai effectue de plus une analyse ligne par ligne pour vérifier s'il ne manque pas de barycentre. S'il en manque, ils sont déterminés par interpolation linéaire entre les barycentres voisins correspondant à la même fente ai.

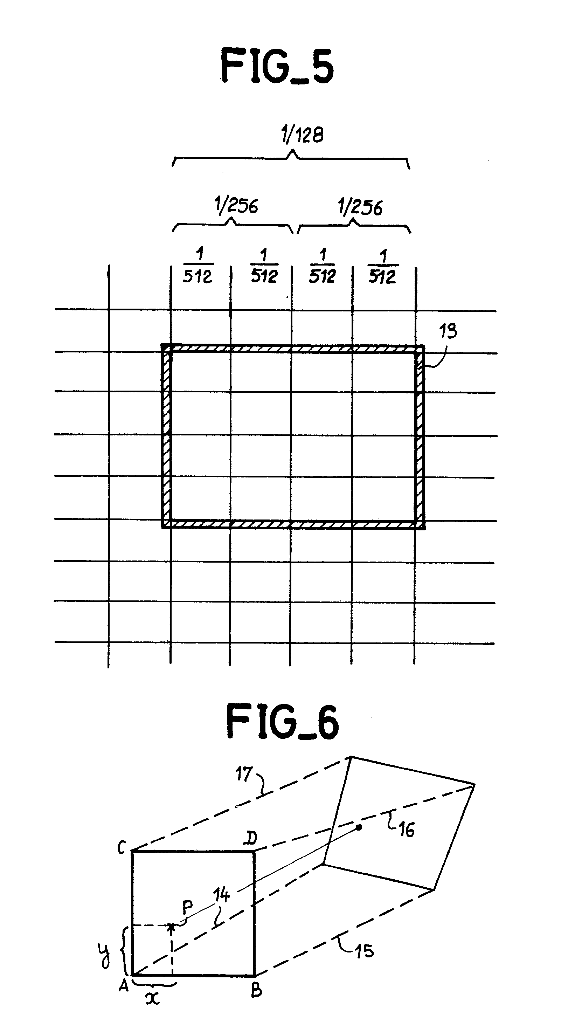

Le programme effectue ensuite une interpolation horizontale par un ensemble de polynômes cubiques de manière à aboutir à 512 points à partir des 66 abscisses de barycentres Xc mesurées. La figure 4 représente schématiquement cette interpolation et montre l'effet de l'invention. Cette figure représente les déplacements DX d'abscisse des barycentres à l'endroit des abscisses calculées Xci de ces barycentres. Par un ensemble de polynômes cubiques on est capable de reconstituer la courbe 4 sur laquelle on détermine les 512 valeurs DX correspondant maintenant à 512 valeurs de Xc. Par opposition à l'état de la technique cité, on a découvert dans l'invention, que pour atteindre la précision attendue (dans le cas particulier de douze bits et de 0,1 mm) il était néc\u00e9ssaire , compte tenu de l'ordre de grandeur du gradient de distorsion généralement obtenu sur les caméras de ANGER, d'utiliser une maille élémentaire du maillage de correction qui soit de l'ordre du 1/128 du champ image. Dans l'état de la technique cité un maillage 64 X 64 était utilisé. Comme on va le voir par la suite, un maillage 64 X 64 conduit à des défauts résiduels importants dans les zones d'image à fort gradient de distorsion. Ce maillage correspond intuitivement et approximativement au nombre de fentes de la mire utilisée. L'approximation cubique qui était ainsi faite dans l'état de la technique tendait à remplacer les mesures d'abscisse de barycentre, par exemple les 66 de l'exemple évoqué, par soixante quatre abscisses de correction qui, pour certaines étaient relativement proches des valeurs mesurées puisque 66 est très peu différent de 64.

Puis, pour mener à bien la totalité de la correction, dans l'état de la technique cité, on utilisait dans une maille élémentaire ainsi définie, une interpolation linéaire. Mais ceci signifiait que les abscisses corrigées, obtenues par interpolation linéaire, étaient entachées dès l'origine d'une erreur qui dans certains cas était nulle (par exemple à l'endroit du point 5) et qui dans d'autres cas était très importante (par exemple l'erreur 6 à l'endroit de l'abscisse 7). Cette erreur pouvant être supérieure à la précision attendue, le calcul d'interpolation ultérieurement effectué était illusoire car il portait sur de mauvaises bases. Par contre, dans l'invention, on choisit une maille élémentaire plus fine, 128 X 128, de telle façon que la courbe 4 soit approchée précisément, et de telle façon que des interpolations linéaires sur une maille plus fine conduisent à des erreurs structurelles 8 inférieures à la précision attendue. Dans le cas présent on a découvert qu'il était nécéssaire de choisir un maillage égal, ou plus fin que 128 X 128.

Pour effectuer l'approximation cubique les équations aux limites sont telles que le polynôme cubique passe par 9, 10 et 11, et que la dérivée 12 du polynôme en 10 soit la bissectrice des segments 9 - 10 et 10 - 11. Le mode de calcul des corrections d'abscisse par un polynôme cubique donne des valeurs de DX en fonction de Yi, DX (Yi), qui se suivent assez continuement en fonction de l'abscisse X. Par contre, d'une ligne Yi à une autre ligne immédiatement adjacente les valeurs de DX à une même abscisse sont relativement discontinues. Le programme peut alors effectuer un lissage vertical à coefficient variable en fonction de la variation des pentes dans le sens vertical. Sur les bords de l'image, les fentes sont extrapolées par des paraboles. De plus, les fentes très raccourcies aux bords du champ, à droite ou à gauche, sont extrapolées par des droites. Il en résulte une nette amélioration de la correction de distorsion sur les bords de l'image. Ceci n'est pas très utile en imagerie directe ( les practiciens s'arrangent toujours pour placer l'organe à visualiser au milieu du champ image). Celà est cependant très utile en tomographie d'organes étendus où l'on réduit de ce fait les artefacts en anneaux.

Rendu à ce stade, seulement la moitié du travail a été accompli. Il convient ensuite de tourner la mire 1 de 90° (puis encore une fois de 180°) et de recommencer toute l'opération pour calculer les corrections d'ordonnée DY(Xi) en fonction de Y. Ce travail est accompli comme précédemment pour X. On obtient finalement deux matrices de coefficients de correction de 512 X 512. Compte tenu de ce qui précède on revient à un maillage de 128 X 128 en faisant la moyenne, comme indiquée sur la figure 5, des corrections d'abscisse à appliquer à chacun des seize éléments d'images adjacents du maillage 512 X 512 et appartenant à une même maille 13 du maillage 128 X 128.

Au moment où une image est acquise on peut décider de ne faire la correction qu'avec la matrice des 512 coefficients de correction, sans interpolation supplémentaire. L'image d'uniformité obtenue présente un moiré qui est dû au recouvrement ou à l'espace entre des pixels voisins car il n'y a pas d'interpolation. Il est donc nécéssaire d'effectuer une interpolation pour éviter ce moiré. Cette interpolation a pour principe le repérage d'une maille élémentaire de l'image distordue dans laquelle se trouve un évènement d'image à replacer dans l'image corrigée. Soit en A B C D, figure 6, les quatre points situés dans les coins de la maille élementaire distordue en question. Les coefficients de correction qui permettent de définir la maille élementaire corrigée sont matérialisés sur la figure 6 par les segments en tirets 14 à 17. Si on appelle DX et DY les deux coefficients de correction appliqués à chacun des points A à D et relatifs respectivement aux segments 14 à 17, on peut calculer, connaissant les coordonnées x y de l'évènement d'image P dans la maille élémentaire A B C D, les corrections de distorsion d'image, DX et DY, à appliquer aux coordonnées X Y de ce point P dans le champ image. Les formules de correction sont les suivantes :

$$DX = (1-x-y+xy)DXa + (x-xy)DXb + (y-xy)DXc + (-xy)DXd$$

$$DY = (1-x-y+xy)DYa + (x-xy)DYb + (y-xy)DYc + (-xy)DYd$$

où a b c et d se rapportent aux points A B C D. On a pu montrer que l'obtention de résultats DX et DY sur 12 bits pouvait être atteinte en calculant les coefficients DX et DY de correction sur onze bits et en calculant les coefficients d'interpolation tels que $(1 - x - y + xy)$ sur 8 bits seulement. En simplifiant l'explication on peut dire que l'obtention à coup sûr du dixième de millimètre ( 12 bits pour un champ image de diamètre 400 millimètres) nécessite d' ajouter au moins deux bits supplémentaires (il faut être aussi précis que le quart de l'écart le plus fin à montrer). Avec le bit de signe cela conduit à devoir manipuler 15 bits.

Cependant, dans l'invention, utilement, on ne mesure que des déplacements de coordonnées et non pas des coordonnées corrigées. En estimant que le déplacement maximum rencontré serait de l'ordre de plus ou moins 24 millimètres (ce qui serait vraiment exceptionnel et néccessiterait en fait un réréglage de la gamma-caméra) on a pu se rendre compte qu'on pouvait gagner ainsi un facteur $400/24 = 16$ , ce qui est équivalent à quatre bits. Il en résulte qu'il n'est plus nécessaire que de manipuler $15 - 4 = 11$ bits (un bit de signe, 8 bits de dynamique et 2 bits fractionnaires). Et en calculant les coefficients d'interpolation sur 8 bits seulement, à cause d'un raisonnement similaire, on peut obtenir des résultats DX et DY sur 12 bits. En utilisant pour effectuer une opération d'interpolation des sommateurs accumulateurs travaillant sur seize bits on peut facilement mettre en oeuvre la précision demandée. Cette dernière explication montre clairement que la précision est en fait obtenue sans augmenter la puissance de calcul mise en oeuvre par rapport à ce qui était décrit dans l'état de la technique.

**Revendications**

1. Procédé de correction de distorsion géométrique d'une image, notamment d'une image produite par une gamma-caméra, cette gamma-caméra fournissant des signaux (Xi, Yi) de sortie qui représentent, dans un champ image, des coordonnées d'événements d'images, le procédé comprenant (les étapes suivantes :

- on mesure les coordonnées des événements d'image (Xc, Yi) obtenus par l'interposition d'une mire (1) test qui correspond à une distribution théorique uniforme des événements d'images,
- on calcule (figure 4) par approximation cubique les déplacements (DX) de coordonnées des points d'un maillage théorique qui correspond à l'image test,
- on en déduit des corrections de distorsion à affecter à des coordonnées d'événements d'image
- et on les applique à ces coordonnées, caractérisé en ce que
- on détermine un nombre minimum de mailles élémentaires dans le maillage correspondant au champ image en fonction d'une précision attendue de la correction de distorsion spatiale, et en ce que pour déduire, on effectue une interpolation (figure 6) linéaire des déplacements (DXa, DXb) relatifs aux coordonnées des points (A, B, C, D) du maillage qui correspondent à un voisinage direct du lieu d'un événement d'image.

2. Procédé selon la revendication 1, caractérisé en ce que pour calculer les déplacements par approximateion cubique on les calcule pour une maille de base plus fine (512) que la maille élémentaire correspondant au dit nombre minimum (128) de mailles élémentaires et en ce qu'on effectue une moyenne des déplacements calculés, ceci afin d'augmenter la précision (fig 5).

3 Procédé selon la revendication 2 caractérisé en ce que le champ image mesure environ 400 millimètres, en ce que la précision attendue est de 0,1 mm, et en ce que le nombre minimum de mailles élémentaires dans le maillage vaut 128 X 128.

4 Procédé selon la revendication 3 caractérisé en ce que les déplacements relatifs (DXa) sont exprimés sur au moins 11 bits, de manière à déduire des corrections de distorsion sur 12 bits à affecter à des coordonnées d'évènements d'image.

5 Procédé selon l'une quelconque des revendications 2 à 4 caractérisé en ce que les expressions des déplacements comportent 2 bits fractionnaires pour permettre d'exprimer le 1/4 du 1/10 de millimètre de précision pour obtenir une précision finale voulue du 1/10 de millimètre.

FIG_1

FIG_2

$H(y_i)$

$m$

$0,35m$

$x_c$

$X$

FIG_3

$Y$

$Y_i$

$X$

$DX$

$a_1$ $a_2$ $a_i$ $(x_c, y_i)$ $a_n$

FIG_4

$DX(y_i)$

10 12 8 6

5 4 11

9 7

0293293

## FIG_5

## FIG_6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,Y | EP-A-0 002 540 (MEDTRONIC)<br>* Page 7, ligne 36 - page 12, ligne 29 *<br><br>--- | 1-5 | G 01 T 1/164 |
| Y | IEEE TRANSACTIONS ON NUCLEAR SCIENCE, vol. NS-32, no. 1, février 1985, pages 870-874, IEEE, New York, US; S.E. KING et al.: "Spectral-spatial-sensitivity distortion trends and an accurate correction method in scintillation gamma cameras"<br>* Page 871, "Linearity correction" *<br><br>--- | 1-5 | |
| D,A | EP-A-0 021 366 (SIEMENS)<br>* Page 6, ligne 34 - page 13, ligne 8 *<br>----- | 1-5 | |

DOMAINES TECHNIQUES RECHERCHES (Int. Cl.4)

G 01 T 1/164
G 06 F 15/68

Le présent rapport a été établi pour toutes les revendications

| Lieu de la recherche | Date d'achèvement de la recherche | Examinateur |
|---|---|---|
| LA HAYE | 18-08-1988 | LECOMTE J.M. |